# EUROPEAN PATENT APPLICATION

(11) **EP 4 746 236 A1**
(43) Date of publication of application: **20.05.2026**
(21) Application number: 24839710.1
(22) Date of filing: 08.07.2024
(51) Int. Cl.: H02J 3/46, G06Q 50/06, H02J 3/32, H02J 3/38, H02J 13/00

(54) **POWER MANAGEMENT DEVICE AND POWER MANAGEMENT SYSTEM**

(30) Priority: 10.07.2023 JP 2023113029
(71) Applicant: Share-ENA Inc., Tokyo 104-0061 (JP)
(72) Inventor: MORITA, Hiroyuki, Tokyo 107-0052 (JP)
(74) Representative: Hasegawa, Kan
(86) International application number: PCT/JP2024/024588
(87) International publication number: WO 2025/013819

(57) **Abstract**

A power management device and a power management system are provided that are capable of maintaining a stable supply and demand balance of power. A power management system comprises: multiple power management devices; and multiple apparatuses connected to the multiple power management devices and functioning as either a load, a generator, or a storage battery. The power management device includes: three or more power input/output ports configured to be connectable, via wiring, to the above-described apparatuses and other power management devices; and a switch unit that switchably connects two power input/output ports from among these power input/output ports, and causes power to be transmitted between the two power input/output ports that are connected to each other. The power management device generates supply-demand information including: a magnitude of power consumption required at apparatuses connected to the power management device and a power shortage rate, or a magnitude of suppliable power and a power surplus rate; and price information to be represented in terms of purchase or sales of power, and sends such information to other power management devices at intervals of a predetermined unit time.

## Description

### TECHNICAL FIELD

The present invention relates to power supply-demand management technology for managing power supply and consumption.

### BACKGROUND ART

The power (electric power) consumed in urban areas has conventionally been generated and subjected to voltage conversion at power plants established in areas that are remote from urban areas, such as in mountainous areas and coastal areas, and then conveyed to urban areas through power transmission lines. It is said that the power loss caused by power transmission amounts to a considerable percentage in the case of, for example, transmitting power from mountainous areas to urban areas.

On the other hand, various generators, such as solar power generators or small-scale hydropower generators, have recently been commercialized for common households and small-scale enterprises. In addition, due to the recent liberalization of retail sales of power, many business operators have begun entering into the power generation business. Thus, more choices are now available for procuring power means, in addition to conventional power supply from major power companies.

Meanwhile, the amount of power consumption in common households or many business facilities is monitored by power meters installed at the respective households/facilities. Power fees for common households and small-scale enterprises are usually set by using the peak value of the power consumption amount within a predetermined period of time (e.g., one day) as a reference based on the monitored readings of such power meters, and such fees are then billed from the power companies.

PLT 1 discloses, as technology related to the charging of power consumed, a power supply method in which a charge is made for power supply to each apparatus. In this power supply method, an apparatus sends a power supply request, a power supplier receives such power supply request, and the power supplier that received the power supply request starts transmitting power packets. When the transmission of power packets starts at the power supplier, the apparatus starts receiving the power packets. The apparatus and the power supplier receive and transmit, respectively, the power packets that will be subject to power routing. The power supply request contains an address of a power supply destination within the power routing and the power supplier attaches the power supply destination address included in the power supply request to the power packets.

### PRIOR ART DOCUMENTS

### PATENT LITERATURE

PTL 1: WO2012/081312

### SUMMARY OF INVENTION

### PROBLEMS TO BE SOLVED BY INVENTION

Given the above-described power loss, it is conceivable that off-grid power generation is performed or the generated power is interchanged among neighboring power users in order to reduce the power transmission distance as much as possible. In such case, a neighboring power user can be either a power supplier or a consumer. In order to maintain a system in which power can be interchanged with each other in this way, it is important to maintain a stable supply-demand balance of power in the system.

The present invention has been made in view of the above and an object thereof is to provide a power management device and a power management system that are capable of maintaining a stable supply-demand balance of power.

### MEANS FOR SOLVING THE PROBLEMS

To solve the above problems, the power management device, which is one aspect of the present invention, is a power management device, in a power management system, that relays transmission of power between multiple apparatuses that function as either a power load, a generator, or a storage battery, the device comprising: three or more power input/output ports configured to be connectable, via wiring, to apparatuses functioning as either a power load, a generator, or a storage battery, and other power management devices; a switch unit configured to switchably connect two power input/output ports from among the three or more power input/output ports, and to cause power to be transmitted between the two power input/output ports that are connected to each other; a storage unit configured to store device identification information individually assigned to the power management device; a communication unit configured to send/receive at least the device identification information to/from other power management devices that are connected to the power management device; a supply-demand information generation unit configured to generate supply-demand information on power at the apparatuses connected to the power management device and send the supply-demand information to other power management devices connected to the power management device at intervals of a predetermined unit time, the supply-demand information including: a magnitude of required power consumption and a power shortage rate, or a magnitude of suppliable power and a power surplus rate; and price information to be represented in terms of purchase or sales of power; and a selection unit configured to determine, at intervals of the predetermined unit time, two power input/output ports that are to be connected to each other from among the three or more power input/output ports, based on the supply-demand information received from other power management devices.

The above-described power management device may further comprise: a power measurement unit configured to measure, at intervals of the predetermined unit time, a direction and an amount of power transmitted between the two power input/output ports connected to each other; and a power information generation unit configured to generate power information including: a direction and an amount of power measured by the power measurement unit; price information included in the supply-demand information sent to or received from another power management device connected to one of the two input power input/output ports that are connected to each other; and device identification information of such another power management device, wherein the storage unit may further store user identification information assigned to each user of the power management device, and the communication unit may be configured to send the power information generated by the power information generation unit to a communication network, in association with the user identification information assigned to the power management device.

In the above-described power management device, in the case where an apparatus functioning as a load is connected to the power management device, the selection unit may select a power input/output port to which another power management device with the highest power surplus rate is connected, as one of the two input/output ports that are to be connected to each other, based on the supply-demand information received from other power management devices.

In the above-described power management device, in the case where an apparatus functioning as a generator is connected to the power management device, the selection unit may select a power input/output port to which another power management device with the highest power shortage rate is connected, as one of the two input/output ports that are to be connected to each other, based on the supply-demand information received from other power management devices.

In the above-described power management device, in the case where an apparatus functioning as a storage battery is connected to the power management device, when the apparatus is in a charging mode, the selection unit may select a power input/output port to which another power management device with the highest power surplus rate is connected, as one of the two power input/output ports that are to be connected to each other, based on the supply-demand information received from other power management devices, and when the apparatus is in a discharging mode, the selection unit may select a power input/output port to which another power management device with the highest power shortage rate is connected, as one of the two input/output ports that are to be connected to each other, based on the supply-demand information received from other power management devices.

In the above-described power management device, in the case where the supply-demand information is received from other power management devices, the selection unit may select one of the two power input/output ports that are to be connected to each other, based on price information included in the supply-demand information.

In the above-described power management device, the supply-demand information generation unit may adjust the price information depending on a magnitude of required power consumption and a power shortage rate or a magnitude of suppliable power and a power surplus rate.

In the above-described power management device, in the case where an apparatus functioning as a load is connected to the power management device, the supply-demand information generation unit may change the price information so as to raise a purchase price of power when a power shortage rate does not change for a predetermined period of time, and in the case where an apparatus functioning as a generator is connected to the power management device, the supply-demand information generation unit may change the price information so as to reduce a sales price of power when a power surplus rate does not change for a predetermined period of time.

In the above-described power management device, the supply-demand information may be sent/received to/from other power management devices through power line communication.

In the above-described power management device, the supply-demand information may be sent/received to/from other power management devices via a communication network.

A power management system, which is another aspect of the present invention, comprises: multiple power management devices that are described above; and multiple apparatuses that function as either a power load, a generator, or a storage battery, and are connected to the multiple power management devices.

### EFFECT OF INVENTION

According to the present invention, it is possible to realize a power management device and a power management system that are capable of maintaining a stable supply-demand balance of power.

### BRIEF DESCRIPTION OF DRAWINGS

[FIG. 1] FIG. 1 is a diagram showing a configuration example of a power management system according to an embodiment of the present invention.
[FIG. 2] FIG. 2 is a block diagram showing a schematic configuration of a power management device shown in FIG. 1.
[FIG. 3A] FIG. 3A is a schematic diagram for describing the operation of a port unit.
[FIG. 3B] FIG. 3B is a schematic diagram for describing the operation of a port unit.
[FIG. 3C] FIG. 3C is a schematic diagram for describing the operation of a port unit.
[FIG. 4] FIG. 4 is a table listing supply-demand information and power information.
[FIG. 5] FIG. 5 is a diagram showing a variation of a power management system.

### EMBODIMENTS OF INVENTION

Hereinafter, a power management device and a power management system according to embodiments of the present invention will be described with reference to the drawings. It should be noted that the present invention is not limited by these embodiments. In the description of each drawing, the same parts are denoted by the same reference numbers.

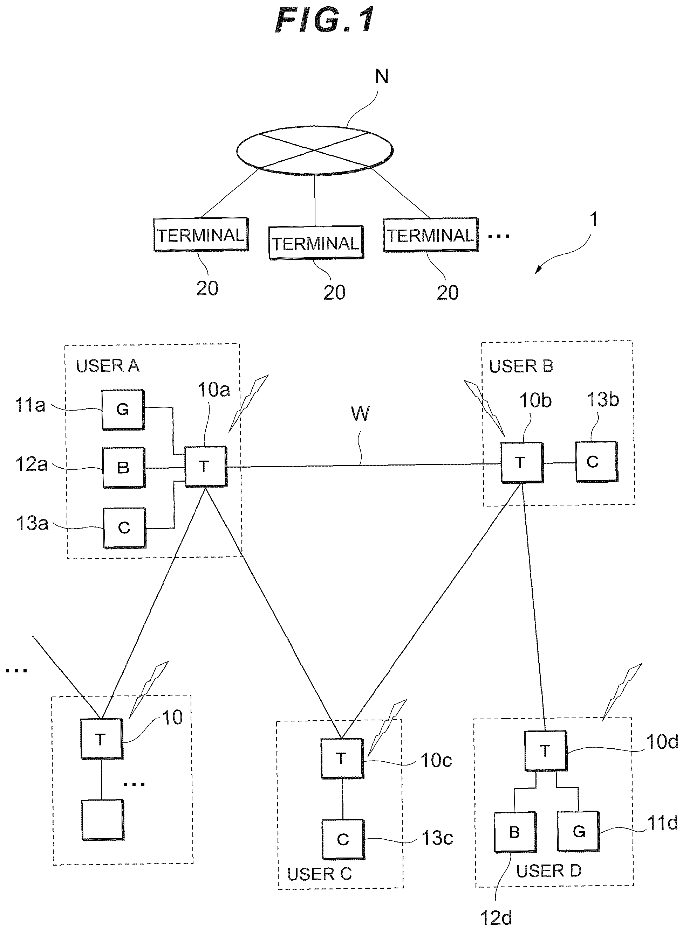

FIG. 1 is a diagram showing a configuration example of a power management system according to an embodiment of the present invention. As shown in FIG. 1, the power management system 1 according to the present embodiment comprises multiple power management devices 10, 10a, 10b, 10c, 10d, etc., connected via wiring W, and multiple apparatuses functioning as either a power load, a generator, or a storage battery. In FIG. 1, generators 11a, 11d, storage batteries 12a, 12d, and loads 13a, 13b, 13c are shown. In the following, the power management devices 10, 10a, 10b, 10c, 10d, etc., may be collectively referred to as a power management device 10. In addition, the generators 11a, 11d may be collectively referred to as a generator 11, the storage batteries 12a, 12d may be collectively referred to as a storage battery 12, and the loads 13a, 13b,13c may be collectively referred to as a load 13. The generator 10 may be a solar power generation system, a wind power generation system, an ocean thermal energy conversion system, a wave power generation system, and other similar power generation systems. In addition, an electric vehicle can be used as the storage battery 12 in addition to a general storage battery.

In particular, a generator 11a, a storage battery 12a, and a load 13a are connected to the power management device 10a used by a user A. A load 13b is connected to the power management device 10b used by a user B. A load 13c is connected to the power management device 10c used by a user C. A generator 11d and a storage battery 12d are connected to the power management device 10d used by a user D. In addition, the power management devices 10a, 10b, and 10c are connected to each other, and the power management devices 10b and 10d are connected to each other.

In this manner, the number of generators 11, storage batteries 12, loads 13, and other power management devices 10 that can be connected to one power management device 10 is not limited as long as it is less than or equal to the number of power input/output ports (described below) provided on each power management device 10. In other words, in the power management system 1, a power transmission network of any kind can be formed by connecting power management devices 10 to each other via wiring W.

The power management device 10 is an apparatus that relays the transmission of power among the generator 11, the storage battery 12, and the load 13. As will be described below, each power management device 10 has a wired or wireless communication function, and may send the information generated by itself to other power management devices 10 and/or terminals 20 via wiring W or a communication network N.

The communication network N may be any of the Internet, a LAN, a telecommunication line, similar lines, and combinations of these, and it may be wired or wireless. The terminal 20 may be configured by a computer (PC), a notebook PC, a tablet terminal, a smartphone, or similar devices. In addition, a server device for the settlement of power usage fees between users may be connected to the communication network N.

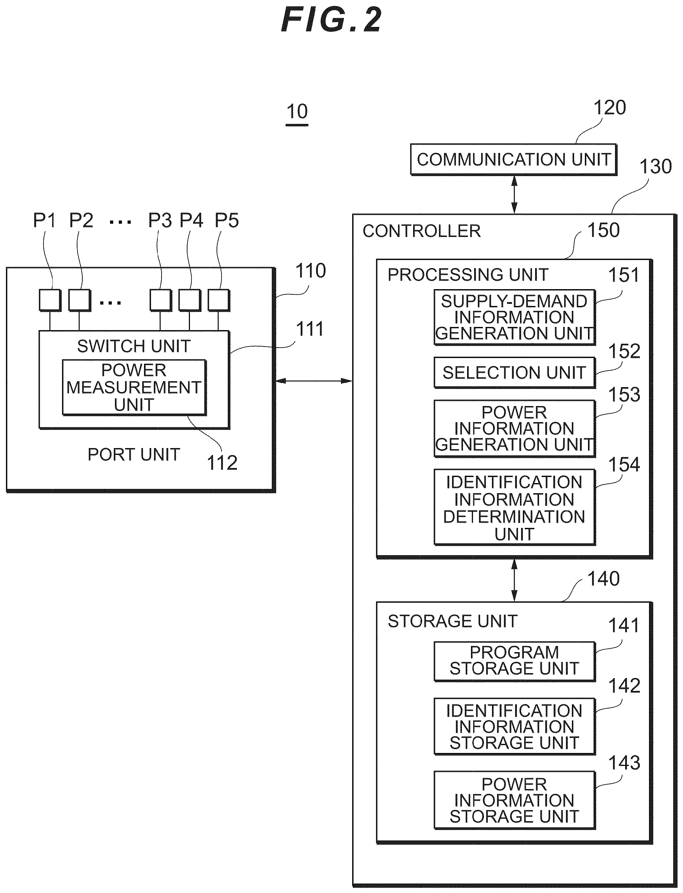

FIG. 2 is a block diagram showing a schematic configuration of a power management device 10. As shown in FIG. 2, the power management device 10 includes a port unit 110, a communication unit 120, and a controller 130.

The port unit 110 comprises: three or more power input/output ports P1, P2, ..., P3, P4, P5; a switch unit 111; and a power measurement unit 112. Each power input/output port P1, P2, ..., P3, P4, P5 is configured to be connectable, via wiring, to the generator 11, the storage battery 12, the load 13, or another power management device 10.

Under the control of the controller 130, the switch unit 111 is configured to switchably connect two power input/output ports from among the three or more power input/output ports P1, P2, ..., P3, P4, P5, and to cause the power to be transmitted between the two power input/output ports that are connected to each other.

The power measurement unit 112 is configured to measure, at intervals of a predetermined unit time, the direction and amount of the power transmitted between the two power input/output ports that are connected to each other. Here, the predetermined unit time is not specifically limited, and can be set as appropriate, such as every 30 seconds, every 1 minute, every 5 minutes, every 30 minutes, every 1 hour, and the like.

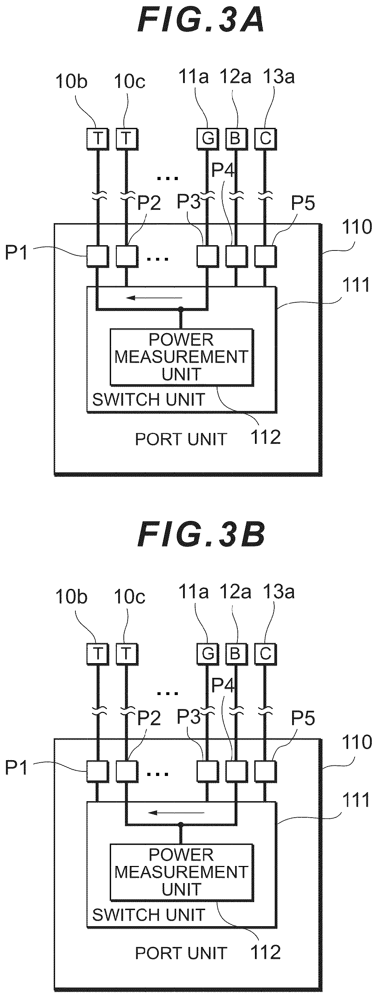

FIGS. 3A to 3C are schematic diagrams for describing the operation of the port unit 110, and the port unit 110 in the user A's power management device 10a is shown as an example. Hereinafter, the power input/output port may be simply referred to as a port. As shown in FIGS. 3A to 3C, the user B's power management device 10b is connected to a port P1 of the power management device 10a via wiring W, and the user C's power management device 10c is connected to a port P2 of the power management device 10a via wiring W. In addition, the generator 11a, the storage battery 12a, and the load 13a are connected to ports P3, P4, and P5, respectively.

As shown in FIG. 3A, when the port P1 and the port P3 are connected in the switch unit 111, the power is supplied from the generator 11a to the load 13b through the power management device 10b. At this time, the power measurement unit 112 measures the amount and direction of the power transmitted from the port P3 to the port P1.

As shown in FIG. 3B, when the port P2 and the port P4 are connected in the switch unit 111, the power is supplied from the storage battery 12a to the load 13c through the power management device 10c. At this time, the power measurement unit 112 measures the amount and direction of the power transmitted from the port P4 to the port P2.

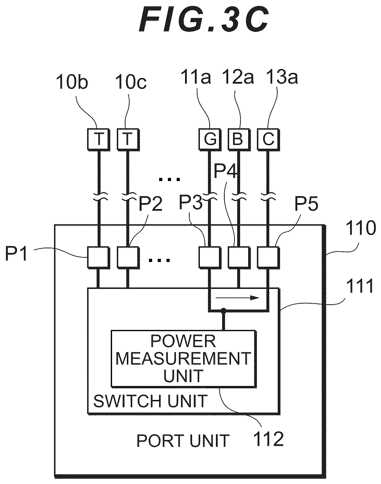

As shown in FIG. 3C, when the port P3 and the port P5 are connected in the switch unit 111, the power is supplied from the generator 11a to the load 13a. At this time, the power measurement unit 112 measures the amount and direction of the power transmitted from the port P3 to the port P5.

The communication unit 120 is a communication interface that sends/receives information to/from other power management devices 10 connected via wiring W through power line communication (PLC). Alternatively, the communication unit 120 may use Bluetooth (registered trademark), wireless fidelity (Wi-Fi), or various other communication technologies to connect the relevant power management device 10 to the communication network N, and may send/receive information to/from apparatuses (other power management devices 10 and/or terminals 20) connected to the communication network N. Of course, the communication unit 120 may combine PLC with other communication technologies to perform communication with other apparatuses.

The communication unit 120 is configured to send/receive at least device identification information (described later) assigned to each power management device 10 to/from the other power management devices 10 connected to the relevant power management device 10.

The controller 130 may be configured by a microcomputer and includes a storage unit 140 and a processing unit 150.

The storage unit 140 may be a storage medium configured by a semiconductor memory, such as ROM or RAM, and includes a program storage unit 141, an identification information storage unit 142, and a power information storage unit 143. The program storage unit 141 stores programs to be executed by the processing unit 150, and/or various parameters used during the execution of such programs.

The identification information storage unit 142 stores device identification information (which may be referred to as device ID hereinafter) individually assigned to the power management device 10 and user identification information (which may be referred to as user ID hereinafter) assigned to each user who uses the relevant power management device 10. In principle, the device ID cannot be rewritten. On the other hand, the user ID can be rewritten.

The power information storage unit 143 stores power information generated by a power information generation unit 153, which will be described later.

The processing unit 150 may be configured by using a central processing unit (CPU), and it reads programs stored in the program storage unit 141 so as to perform overall control of the respective units in the power management device 10 and to perform various processing. Specifically, the processing unit 150 sends/receives information generated in the relevant power management device 10 to/from other power management devices 10 and/or terminals 20 so as to manage the supply and demand of power and to perform various computational processing for managing the information used for the settlement of power usage fees. The function units implemented by the processing unit 150 include a supply-demand information generation unit 151, a selection unit 152, a power information generation unit 153, and an identification information determination unit 154.

The supply-demand information generation unit 151 generates supply-demand information on power in apparatuses connected to the relevant power management device 10 and sends the supply-demand information to other power management devices 10 connected to the relevant power management device 10 at intervals of a predetermined unit time. The supply-demand information includes: the magnitude of required power consumption and a power shortage rate, or the magnitude of suppliable power and a power surplus rate in the relevant power management device 10; and price information to be represented in terms of the purchase or sale of power. In addition, the supply-demand information may also include the device ID assigned to the relevant power management device 10.

As an example, the supply-demand information generated in the user A's power management device 10a may include: the magnitude of power that can be supplied by the generator 11a and the power surplus rate; the magnitude of power consumption required at the load 13a and the power shortage rate; or the magnitude of power that can be supplied by the storage battery 12a and the power surplus rate or the magnitude of power required for charging and the power shortage rate.

Here, the supply-demand information on the generator 11a may be generated depending on the power output at that time, in addition to the rated output of the generator 11a. For example, in the case where the generator 11a is a solar power generation system, the amount of suppliable power is larger on sunny days and the amount of suppliable power is smaller on rainy days. The supply-demand information on the storage battery 12a may be generated depending on the charge rate at the storage battery 12a. For example, if the charge rate is above a threshold, supply-demand information including the magnitude of suppliable power and the surplus rate may be generated, and if the charge rate is below the threshold, supply-demand information including the required power and shortage rate may be generated.

The supply-demand information generated in the power management device 10b used by the user B may include the magnitude of power consumption required in the load 13b and the power shortage rate. In summary, the supply-demand information generation unit 151 generates supply-demand information depending on the apparatuses (the generator 11, the storage battery 12, the load 13) connected to the relevant power management device 10 and their operating statuses (e.g., power on/off, charge rate).

The price information included in the supply-demand information is either information that represents a purchase price to be offered when receiving power supply from (an apparatus connected to) another power management device 10 or information that represents a sales price to be offered when supplying power to (an apparatus connected to) another power management device 10. The price information can be the amount of money itself, a multiplier with respect to a predetermined base price, or the number of points.

The supply-demand information generation unit 151 may adjust the price information to be presented depending on the magnitude of required power consumption and the power shortage rate or the magnitude of suppliable power and the power surplus rate in the apparatus connected to the relevant power management device 10.

Additionally, in the case where the load 13 is connected to the relevant power management device 10, the supply-demand information generation unit 151 may change the price information so as to raise the purchase price of power when the power shortage rate does not change for a predetermined period of time. On the other hand, in the case where the generator 11 is connected to the relevant power management device 10, the supply-demand information generation unit 151 may change the price information so as to reduce the sales price of power when the power surplus rate does not change for a predetermined period of time.

The supply-demand information generation unit 151 may also perform transmission by adding the user ID stored in the identification information storage unit 142 to the supply-demand information.

The time interval in which the supply-demand information generation unit 151 generates the supply-demand information and sends it to other power management devices 10 may, in principle, be synchronized with the unit time in which the above-mentioned power measurement unit 112 measures power.

The supply-demand information may be sent/received to/from other power management devices 10 connected to the relevant power management device 10 via wiring W through power line communication (PLC), or it may be sent/received to/from other power management devices 10 via the communication network N.

In the case where the relevant power management device 10 receives the supply-demand information from other power management devices 10, the selection unit 152 is configured to determine, at intervals of the above mentioned predetermined unit time, two ports that are to be connected to each other from among the three or more ports P1, P2, etc., based on the received supply-demand information. The selection unit 152 may be configured to operate in a synchronized manner with the receipt of the supply-demand information in the supply-demand information generation unit 151.

In particular, the selection unit 152 can select one of the two ports P1, P2, etc. to be connected to each other, based on the price information included in the supply-demand information received from other power management devices 10.

As an example, in the case where the user A's generator 11a is operating, and the user A's power management device 10a receives supply-demand information to the effect that power is requested (i.e., such information includes the required power and the shortage rate) from both the user B's power management device 10a and the user C's power management device 10c, the power management device 10a compares the price information included in such supply-demand information and connects the port, to which the power management device 10b or 10c with the higher purchase price indicated in the price information is connected, to the port to which the generator 11a is connected, and transmits power from the generator 11a.

As another example, in the case where the user B's load 13b is operating, and the user B's power management device 10b receives supply-demand information to the effect that power is to be supplied (i.e., such information includes the supply power and the surplus rate) from both the user A's power management device 10a and the user D's power management device 10d, the power management device 10b may compare the price information included in such supply-demand information and connect the port, to which the power management device 10a or 10d with the lower sales price indicated in the price information is connected, to the port to which the load 13b is connected, and transmit power to the load 13b.

In addition, in the case where the load 13 is connected to the relevant power management device 10, the selection unit 152 may select the port P1, P2, etc. to which another power management device 10 with the highest power surplus rate is connected, as one of the two ports to be connected to each other, based on the supply-demand information received from other power management devices 10. As an example, in the case where the user B's power management device 10b receives supply-demand information from both the user A's power management device 10a and the user D's power management device 10d, the power management device 10b may connect the port, to which the power management device 10a or 10d with the higher power surplus rate included in the supply-demand information is connected, to the port to which the load 13b is connected, and transmit power to the load 13b.

In addition, in the case where the generator 11 is connected to the relevant power management device 10, the selection unit 152 may select the port P1, P2, etc. to which another power management device 10 with the highest power shortage rate is connected, as one of the two ports to be connected to each other, based on the supply-demand information received from other power management devices 10. As an example, in the case where the user A's power management device 10a receives supply-demand information from both the user B's power management device 10b and the user C's power management device 10c, the power management device 10a may connect the port, to which the power management device 10b or 10c with the higher power shortage rate included in the supply-demand information is connected, to the port to which the generator 11 is connected, and transmit power from the generator 11.

In addition, in the case where the storage battery 12 is connected to the relevant power management device 10, when the storage battery 12 is in a charging mode, the selection unit 152 may select the port P1, P2, etc. to which another power management device 10 with the highest power surplus rate is connected, as one of the two ports to be connected to each other, based on the supply-demand information received from other power management devices 10. On the other hand, when the relevant storage battery 12 is in a discharging mode, the selection unit 152 may select the port to which another power management device 10 with the highest power shortage rate is connected, as one of the two ports P1, P2, etc. to be connected to each other, based on the supply-demand information received from other power management devices 10.

The parameters used when adjusting the price information depending on the power surplus rate or shortage rate may be settable by each user operating the power management device 10 through the terminal 20.

The power information generation unit 153 is configured to generate power information including: the direction and amount of power measured by the power measurement unit 112; the price information included in the supply-demand information sent/received to/from another power management device 10 connected to one of the two ports connected to each other; and the device ID of such another power management device 10, and to store the power information in the power information storage unit 143. The power management device 10 is configured such that the power information stored in the power information storage unit 143 is associated with the device ID assigned to the power management device 10 and sent to the communication network N by the communication unit 120.

In the case where the user ID is included in the supply-demand information received from other power management devices 10, the identification information determination unit 154 determines whether this user ID is the same as the user ID stored in its own identification information storage unit 142.

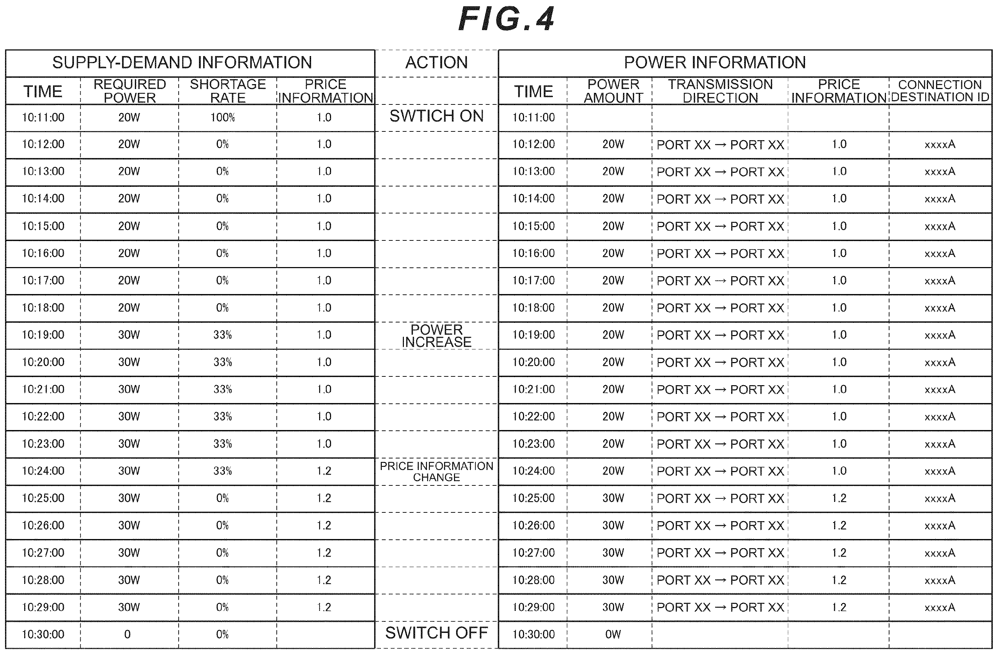

Next, the operation of each power management device 10 in the power management system 1 will be described in detail. FIG. 4 is a table listing supply-demand information and power information, and it provides examples of supply-demand information and power information generated by the power management device 10b used by the user B. As shown in FIG. 1, a load 13b is connected to the power management device 10b. Therefore, if the load 13b is used, it needs to receive power supply through wiring W. In FIG. 4, the supply-demand information and power information are generated every minute. In addition, in FIG. 4, the price information shows the multipliers with respect to the base price.

Here, when the respective power management devices 10 are connected to each other through wiring W, they send/receive device IDs to/from the connected power management devices 10. Thereby, each power management device 10 can identify the source or destination of the supply-demand information and the power management device 10 of the power transmission destination or the power supply source.

When the user B turns on the power switch of the load 13b, the power management device 10b generates supply-demand information for receiving power supply to the load 13b and sends the supply-demand information to power management devices 10a, 10d connected via wiring W. As shown in FIG. 4, the supply-demand information at the time when the switch is turned on (time 10:11:00) indicates that the required power is 20 W, the shortage rate is 100%, and the price information is 1.0.

The user A's power management device 10a, the user C's power management device 10c, and the user D's power management device 10d receive the supply-demand information sent from the user B's power management device 10b. The power management device 10, from among the above, which is ready to supply power, generates supply-demand information including the magnitude of suppliable power, the power surplus rate, and the price information, and sends the supply-demand information to the power information management device 10b. Here, it is assumed that the supply-demand information is sent from the user A's power management device 10a to the user B's power management device 10b. It should be noted that the price information included in the supply-demand information sent from the power management device 10a may be the same as or different from the price information included in the supply-demand information sent from the power management device 10b.

The user A's power management device 10a sends the supply-demand information to the power management device 10b, and connects the port to which the generator 11a is connected and the port to which the power management device 10b is connected. Upon receiving such supply-demand information from the power management device 10a, the power management device 10b connects the port to which the power management device 10a is connected and the port to which the load 13b is connected. Thereby, power supply to the load 13b starts (from time 10: 12:00). After the power supply starts, the power shortage at the load 13b is resolved, and the supply-demand information generated by the power management device 10b shows a 0% shortage rate.

It should be noted that in the case where the price information included in the supply-demand information received by the power management device 10b from the power management device 10a differs from the price information presented by the power management device 10b, the power management device 10b may determine whether to connect the port.
The range (parameter) of the price information for determining to proceed with the connection of the port can be set in advance in the relevant power management device 10b through the terminal 20.

The power information generation unit 153 of the power management device 10b generates power information including the amount and transmission direction of power measured by the power measurement unit 112. This power information includes: the price information (which is 1.0 at the time 10:12:00) in the supply-demand information sent by the power management device 10b to the power management device 10a; and the device ID of the user A's power management device 10a.

When the user B increases the power of the load 13b to 30 W (at time 10:19:00), if the power supply from the power management device 10a remained at 20 W, the power would run short in the load 13b. Correspondingly, the power management device 10b generates supply-demand information including information of the required power 30 W and the shortage rate 33%, and sends it to the power management devices 10a, 10c, and 10d connected via wiring W.

When the power transmitted from any of the power management devices 10a, 10c, and 10d does not increase and the shortage rate does not change for a predetermined period of time, the power management device 10b changes the price information so as to raise the power purchase price and sends the supply-demand information (time 10:24:00). In response to this, when the supply-demand information in which the supply power is increased is sent from any of the power management devices 10a, 10c, and 10d (e.g., the power management device 10a), the power management device 10b connects the port based on such supply-demand information. Thereby, the transmitted power increases (see 10:25:00 in the power information), and the shortage rate in the supply-demand information becomes 0%. In addition, the price information in the power information is changed accordingly.

When the user B switches off the load 13b (at time 10:30:00), the required power in the supply-demand information becomes 0 W and the shortage rate also becomes 0%. When the load 13b is switched off, the power management device 10b may either send supply-demand information with a required power of 0 W and a shortage rate of 0%, or stop sending the supply-demand information. The power management device 10b also performs disconnection of the port. Thereby, the transmission of power from the power management device 10a to the power management device 10b is also stopped.

The power information generated in the power management device 10b is associated with the user ID of the user B and sent to the communication network N. The power information may be kept by utilizing a so-called "blockchain system" in which the power information is held in a distributed manner among multiple terminals 20 connected to the communication network N, and according to the needs, the power fees (or points) may be settled between users using the terminals 20. Alternatively, the power information may be accumulated in a server for settlement, and the settlement between users may be made at this server.

As described above, according to the present embodiment, supply-demand information is sent/received to/from the power management devices 10 connected through wiring W, and the destination of the power supply or the source of the power supply is determined based on such supply-demand information. Therefore, by performing such operations at a predetermined time interval, the system as a whole will naturally approach a state in which the supply and demand are balanced. Accordingly, it is possible to maintain a stable supply-demand balance of power in the power management system 1.

In addition, according to the present embodiment, the usage fees for the power supplied or consumed at each apparatus can be settled by sending power information to terminals 20 connected to the communication network N. Further, according to the present embodiment, because the destination of the power supply or the source of the power supply is determined based on the price information included in the supply-demand information, the power usage fees will become stable as a whole.

Moreover, according to the present embodiment, because the price information presented in the supply-demand information fluctuates depending on the supply-demand status of power, an incentive is created such that the power consumption is suppressed when the price is high, the power is used when the price is low, the power is charged when the price is low, the power is discharged when the price is high, and the like, and which therefore makes it possible to optimize the supply-demand status of power in the system as a whole.

Here, in the above-described example, it is assumed that the power management device 10a supplies power depending on the supply-demand information sent by the power management device 10b. However, in the case where both power management devices 10a and 10d are capable of supplying power to the power management device 10b, the power management device 10b may determine (switch the ports at the port unit 110) to receive power supply from the one with a higher power surplus rate or a lower price presented by the price information, based on the supply-demand information sent from the power management devices 10a and 10d. Such switching of the ports may be performed at a predetermined time interval.

In the above-described example, the case in which the power management device 10b receives power supply is described, but even in the case where, for example, the power management device 10a supplies power, the power supply destination can still be determined in a similar manner through sending/receiving of the supply-demand information. Specifically, upon receiving supply-demand information to the effect that power is short from both the power management devices 10b and 10c, the power management device 10a may determine that power is to be supplied to the one with a higher power shortage rate or a higher price presented by the price information.

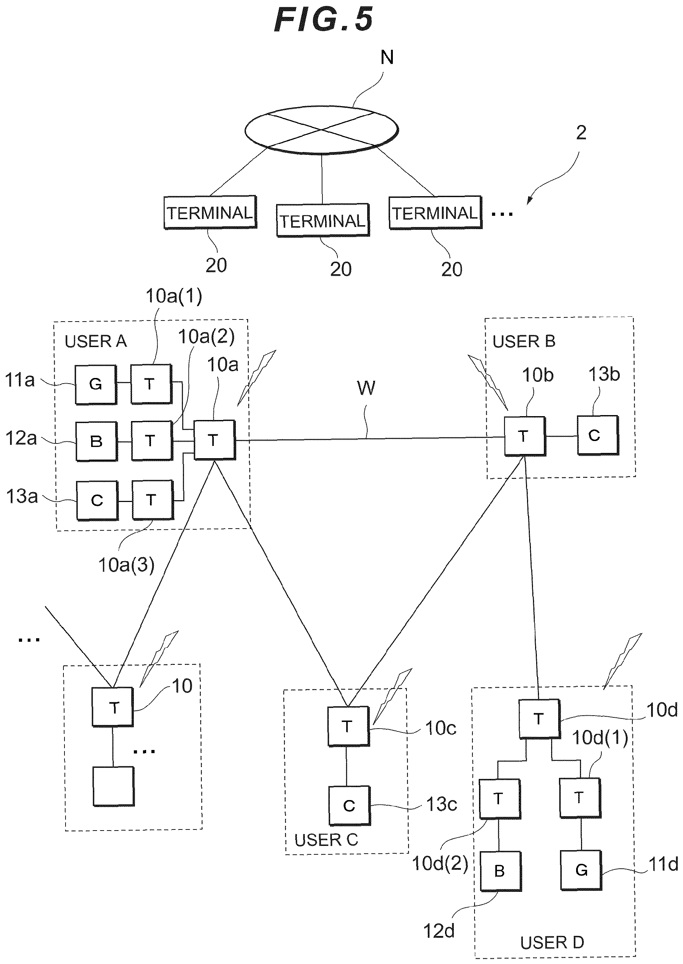

FIG. 5 is a diagram showing a variation of a power management system. The power management system 2 shown in FIG. 5 differs from the power management system shown in FIG. 1 in that power management devices 10a(1), 10a(2), and 10a(3) are connected to the user A's power management device 10a at the terminal side thereof, and power management devices 10d(1) and 10d(2) are connected to the user D's power management device 10d at the terminal side thereof. Specifically, the user A's generator 11a, storage battery 12a, and load 13a are connected to the power management device 10a via the power management devices 10a(1), 10a(2), and 10a(3), respectively. The user D's generator 11d and storage battery 12d are also connected to the power management device 10d via the power management devices 10d(1) and 10d(2), respectively.

The power generation and/or consumption of the user A can be automatically managed by respectively connecting the generator 11a, the storage battery 12a, and the load 13a via the power management devices 10a(1), 10a(2), and 10a(3) in this manner. As an example, in the case where the power management device 10a receives supply-demand information generated by the power management device 10a(1) when the generator 11a is operating, and supply-demand information generated by the power management device 10a(3) when the load 13a is operating, the power management device 10a may determine (perform port connection) such that the power generated by the generator 11a should be consumed at the load 13a. In addition, the power management device 10a may determine (perform port connection), based on the supply-demand information generated by the power management device 10a(2), that: when the storage battery 12a is in a charging mode (when the charge rate is below a predetermined threshold), the power generated by the generator 11a should be supplied to the storage battery 12a; and when the storage battery 12a is sufficiently charged (when the charge rate is above the predetermined threshold), the power generated by the generator 11a should be supplied to apparatuses of other users.

Here, the same user ID of the user A is assigned to the power management devices 10a, 10a(1), 10a(2), and 10a(3). Therefore, the supply-demand information generation unit 151 of each power management device 10 may send the generated supply-demand information to other power management devices 10, in association with its own user ID, and the identification information determination unit 154 may determine whether the user ID associated with the supply-demand information received from another power management device 10 is the same as its own user ID. Then, in the case where the power management device 10 receives supply-demand information from multiple other power management devices 10, priority may be given to the supply-demand information associated with the same user ID as its own user ID.

As an example, in the case where the user A's power management device 10a receives supply-demand information simultaneously from both the power management device 10a(3) and the user B's power management device 10b, the power generated by the generator 11a may be preferentially transmitted to the power management device 10a(3) of the same user.

In the above-described embodiment and variation, two ports were connected at the port unit 111. However, there may be three or more ports connected to each other depending on the configuration of the system. In this case, it is possible, for example, to supply power to multiple loads from a single generator, to supply power to a single load from multiple generators, or to charge a storage battery with the surplus power while supplying power to a load from a single generator.

The present invention is not limited to the embodiment and variation described above, and may be carried out in various other forms within the scope that does not depart from the spirit of the present invention. For example, such various other forms may be formed by excluding some components from all of the components shown in the embodiment and variation, or by appropriately combining the components shown in the embodiment and variation.

### DESCRIPTION OF REFERENCE NUMBERS

1, 2 ... Power management system; 10, 10a, 10a(1), 10a(2), 10a(3), 10b, 10c, 10d, 10d(1), 10d(2) ... Power management device; 11, 11a, 11d ... Generator; 12, 12a, 12d ... Storage battery; 13, 13a, 13b, 13c ... Load; 20 ... Terminal; 110 ... Port unit; 111 ... Switch unit; 112 ... Power measurement unit; 120 ... Communication unit; 130 ... Controller; 140 ... Storage unit; 141 ... Program storage unit; 142 ... Identification information storage unit; 143 ... Power information storage unit; 150 ... Processing unit; 151 ... Supply-demand information generation unit; 152 ... Selection unit; 153 ... Power information generation unit; 154 ... Identification information determination unit; P1, P2, ..., P3, P4, P5 ... Power input/output port (port)

## Claims

1. A power management device, in a power management system, that relays transmission of power between multiple apparatuses that function as either a power load, a generator, or a storage battery, the device comprising:
three or more power input/output ports configured to be connectable, via wiring, to apparatuses functioning as either a power load, a generator, or a storage battery, and other power management devices;
a switch unit configured to switchably connect two power input/output ports from among the three or more power input/output ports, and to cause power to be transmitted between the two power input/output ports that are connected to each other;
a storage unit configured to store device identification information individually assigned to the power management device;
a communication unit configured to send/receive at least the device identification information to/from other power management devices that are connected to the power management device;
a supply-demand information generation unit configured to generate supply-demand information on power at the apparatuses connected to the power management device and send the supply-demand information to other power management devices connected to the power management device at intervals of a predetermined unit time, the supply-demand information including: a magnitude of required power consumption and a power shortage rate, or a magnitude of suppliable power and a power surplus rate; and price information to be represented in terms of purchase or sales of power; and
a selection unit configured to determine, at intervals of the predetermined unit time, two power input/output ports that are to be connected to each other from among the three or more power input/output ports, based on the supply-demand information received from other power management devices.

2. The power management device according to claim 1, further comprising:
a power measurement unit configured to measure, at intervals of the predetermined unit time, a direction and an amount of power transmitted between the two power input/output ports that are connected to each other; and
a power information generation unit configured to generate power information including: a direction and an amount of power measured by the power measurement unit; price information included in the supply-demand information sent to or received from another power management device connected to one of the two input power input/output ports that are connected to each other; and device identification information of such another power management device, wherein
the storage unit further stores user identification information assigned to each user of the power management device, and
the communication unit is configured to send the power information generated by the power information generation unit to a communication network, in association with the user identification information assigned to the power management device.

3. The power management device according to claim 1 or 2, wherein, in the case where an apparatus functioning as a load is connected to the power management device, the selection unit selects a power input/output port to which another power management device with the highest power surplus rate is connected, as one of the two input/output ports that are to be connected to each other, based on the supply-demand information received from other power management devices.

4. The power management device according to any one of claims 1 to 3, wherein, in the case where an apparatus functioning as a generator is connected to the power management device, the selection unit selects a power input/output port to which another power management device with the highest power shortage rate is connected, as one of the two input/output ports that are to be connected to each other, based on the supply-demand information received from other power management devices.

5. The power management device according to any one of claims 1 to 4, wherein, in the case where an apparatus functioning as a storage battery is connected to the power management device,
when the apparatus is in a charging mode, the selection unit selects a power input/output port to which another power management device with the highest power surplus rate is connected, as one of the two power input/output ports that are to be connected to each other, based on the supply-demand information received from other power management devices, and
when the apparatus is in a discharging mode, the selection unit selects a power input/output port to which another power management device with the highest power shortage rate is connected, as one of the two input/output ports that are to be connected to each other, based on the supply-demand information received from other power management devices.

6. The power management device according to any one of claims 1 to 5, wherein, in the case where the supply-demand information is received from other power management devices, the selection unit selects one of the two power input/output ports that are to be connected to each other, based on price information included in the supply-demand information.

7. The power management device according to claim 6, wherein the supply-demand information generation unit adjusts the price information depending on a magnitude of required power consumption and a power shortage rate or a magnitude of suppliable power and a power surplus rate.

8. The power management device according to claim 7, wherein, in the case where an apparatus functioning as a load is connected to the power management device, the supply-demand information generation unit changes the price information so as to raise a purchase price of power when a power shortage rate does not change for a predetermined period of time, and
in the case where an apparatus functioning as a generator is connected to the power management device, the supply-demand information generation unit changes the price information so as to reduce a sales price of power when a power surplus rate does not change for a predetermined period of time.

9. The power management device according to any one of claims 1 to 8, wherein the supply-demand information is sent/received to/from other power management devices through power line communication.

10. The power management device according to any one of claims 1 to 8, wherein the supply-demand information is sent/received to/from other power management devices via a communication network.

11. A power management system, comprising: multiple power management devices according to any one of claims 1 to 8, the multiple power management devices being connected via wiring; and
multiple apparatuses that function as either a power load, a generator, or a storage battery, and are connected to the multiple power management devices.
